# EUROPÄISCHE PATENTANMELDUNG

(11) **EP 1 894 766 A2**
(43) Veröffentlichungstag der Anmeldung: **05.03.2008**
(21) Anmeldenummer: 07015892.8
(22) Anmeldetag: 13.08.2007
(51) Int. Cl.: B60K 17/16

(54) **Achsgetriebe**

(30) Priorität: 04.09.2006 DE 102006041423; 04.09.2006 DE 102006041422
(71) Anmelder: Magna Powertrain AG & Co. KG, 8502 Lannach (AT)
(72) Erfinder: Hasewend, Wolfram, Dr., 8041 Graz (AT)
(74) Vertreter: Manitz, Finsterwald & Partner GbR

(57) **Zusammenfassung**

Die Erfindung betrifft ein Achsgetriebe (24) eines Kraftfahrzeugs, mit einer Eingangswelle, die um eine Längsachse umläuft und ein antriebsseitiges Ende aufweist, über die ein Antriebsmoment einleitbar ist, und mit einem Differential (32), das eingangsseitig mit der Eingangswelle (80) und ausgangsseitig mit zwei Rückführwellen (34a,34b) antriebsverbunden ist. Die Rückführwellen sind bezüglich der Längsachse an zwei einander gegenüber liegenden Seiten des Achsgetriebes angeordnet und mit einer jeweiligen Achswelle (22,22') gekoppelt. Die Rückführwellen verlaufen zumindest annähend parallel zur Eingangswelle und erstrecken sich vom antriebsseitigen Ende der Eingangwelle in Richtung der Achswellen.

## Beschreibung

Die vorliegende Erfindung betrifft ein Achsgetriebe eines Kraftfahrzeugs, mit einer Eingangswelle, die um eine Längsachse umläuft und ein antriebsseitiges Ende aufweist, über die ein Antriebsmoment einleitbar ist, und mit einem Differential, das eingangsseitig mit der Eingangswelle und ausgangsseitig mit zwei Rückführwellen verbunden ist.

Ein herkömmlicher Antriebsstrang weist ein an der Hinterachse angeordnetes Schaltgetriebe auf. Ein solcher Antriebsstrang ist aus der US 5,758,738 bekannt. Ein Problem besteht darin, dass der Getriebeein-und -ausgang auf einer Längsachse oder auf parallel verlaufenden Längsachsen liegen und daher die Umlenkung zu den Seitenwellen erst durch ein geeignetes Getriebe erfolgen muss. Dabei ist aber das Schaltgetriebe selbst eine Hürde, da es durch seine dichte Anordnung von Komponenten nicht mit einem Durchgang versehen werden kann.

Prinzipiell werden hier so genannte Transaxlegetriebe verwendet, die bereits ein integriertes Achsgetriebe in Form einer Differentialeinheit aufweisen. In einer Ausführungsform (beispielsweise Corvette C5 von General Motors) ist eine Differentialeinheit hinter dem Schaltgetriebe angeordnet. Demzufolge sitzt das Schaltgetriebe vor der Hinterachse in Richtung der Fahrgasträume. Nachteilig ist vor allem die weit in den Innenraum verschobene Position, womit auch eine in bestimmten Grenzen wählbare Positionierung verloren geht. Zusätzlich wird die erreichbare Massenverteilung beschränkt.

In einer anderen Ausführungsform (beispielsweise Schaltgetriebe der Firmen Audi und Porsche) ist die Drehachse der Ausgänge der Differentialeinheit unter der Längsachse des Schaltgetriebes angeordnet. Somit ist ein größerer Anteil des Gewichts des Schaltgetriebes über der Drehachse der Differentialausgänge angeordnet, wobei der Schwerpunkt des Fahrzeuges nachteilig höher angeordnet ist.

Zudem umfassen die oben erwähnten Differentialeinheiten ein relativ großes Tellerrad, um das Drehmoment von dem Getriebeausgang zu den Achswellen zu übertragen. Somit benötigt die Differentialeinheit entsprechenden Bauraum innerhalb des Schaltgetriebes und unterhalb des Fahrzeuges, wobei eine höhere Positionierung des Schaltgetriebes innerhalb des Fahrzeuges erfolgen muss.

Für moderne Antriebsstränge sind so genannte "Active-Yaw" oder "Torque Vectoring" (TV)-Systeme bekannt. Mit einem TV-System wird die Giergeschwindigkeit des Fahrzeuges aktiv gesteuert, wobei die Antriebsmomente ungleich auf die Räder verteilt werden können. Dadurch kann mehr Antriebsmoment beispielsweise zum kurvenäußeren Rad gelenkt werden, so dass bei normalen Fahrbedingungen ein übersteuerndes Verhalten eingestellt werden kann.

Ein TV-System umfasst zusätzliche Komponenten, die innerhalb beispielsweise eines Transaxlegetriebes der oben erwähnten Art eingebaut werden müssen. Der Einbau solcher Komponenten in derartige Transaxlegetriebe kann die oben erwähnten Probleme solcher Getriebe vergrößern.

Es ist die Aufgabe der vorliegenden Erfindung, ein Achsgetriebe zu schaffen, das eine vorteilhafte Anordnung von Komponenten eines Antriebstranges eines Fahrzeuges ermöglicht, eine einfache Konstruktion aufweist, leicht herzustellen ist und mit herkömmlichen Antriebsstrangkomponenten darstellbar ist.

Die Lösung dieser Aufgabe erfolgt durch die Merkmale des Anspruchs 1 und insbesondere dadurch, dass die Rückführwellen bezüglich der Längsachse an zwei einander gegenüber liegenden Seiten des Achsgetriebes angeordnet und mit einer jeweiligen Achswelle gekoppelt sind, und dass die Rückführwellen zumindest annähend parallel zur Eingangswelle verlaufen und sich vom antriebsseitigen Ende der Eingangswelle in Richtung der Achswellen erstrecken.

Das so ausgebildete Achsgetriebe kann mit beliebigen Schaltgetrieben verwendet werden, um die Umlenkung von Drehmoment zu den Achswellen zu erzielen. Zudem sieht das erfindungsgemäße Achsgetriebe einen kompakten Aufbau mit wenigen und einfachen Getriebeelementen vor. Das Achsgetriebe kann innerhalb eines Fahrzeuges so angeordnet werden, dass eine Einschränkung des Passagierraums vermieden wird und eine vorteilhafte Massenverteilung leicht erreicht werden kann. Durch den im Wesentlichen symmetrischen Aufbau können auftretende Kräfte und Momente sich gegenseitig kompensieren, so dass keine negative Beeinflussung des Schaltgetriebes erfolgt.

Vorteilhafte Ausführungsformen der Erfindung sind in der Beschreibung, den Zeichnungen und den Unteransprüchen beschrieben.

Gemäß einer Ausführungsform des erfindungsgemäßen Achsgetriebes weist das Differential zumindest zwei Ausgangsstirnräder auf, die in Stirnräder der jeweiligen Rückführwellen eingreifen. Mit anderen Worten besteht zwischen den Ausgängen des Differentials und den Rückführwellen eine Verbindung über eine Stirnradverzahnung, wodurch sich der erforderliche Achsversatz zwischen der Eingangswelle und den Rückführwellen auf einfache Weise realisieren lässt.

Es ist bevorzugt, wenn das Achsgetriebe ferner ein Mittel umfasst, das einen Direktantrieb zumindest einer der Rückführwellen durch die Eingangswelle ermöglicht. Durch das Mittel kann somit eine direkte Kopplung der Eingangswelle mit zumindest einer der Rückführwellen hergestellt werden. Diese Kopplung ermöglicht eine Beaufschlagung der entsprechenden Rückführwelle mit einem zusätzlichen Drehmoment. Durch eine geeignete Steuerung des Mittels kann diese Beaufschlagung selektiv erfolgen, d.h. variiert und an die jeweiligen Erfordernisse angepasst werden, wodurch ein effizientes TV-System geschaffen wird.

Eine Weiterbildung der vorstehend beschriebenen Ausführungsform sieht vor, dass ein Stirnrad drehfest mit der Eingangswelle verbunden ist, wobei dieses Stirnrad in jeweilige Stirnräder eingreift, die drehfest mit der jeweiligen Rückführwelle verbindbar sind. Die drehfeste Verbindung dieser Rückführwellenstirnräder kann beispielsweise durch eine Reibungskupplung ermöglicht werden.

Insbesondere umfasst das Mittel Lamellenkupplungen, wobei die mit dem Stirnrad der Eingangswelle kämmenden Rückführwellenstirnräder drehfest mit jeweiligen Kupplungsnaben der Lamellenkupplungen verbunden sind. Alternativ oder zusätzlich können die mit den Ausgangsstirnrädern des Differentials kämmenden Stirnräder drehfest mit einem Kupplungskorb der jeweiligen Lamellenkupplung verbunden sein.

Die Anordnung von jeweiliger Kupplungsnabe und jeweiligem Kupplungskorb kann gleichwirkend vertauscht werden. Es ist also auch möglich, dass der jeweilige Kupplungskorb drehfest mit dem jeweiligen Stirnrad verbunden ist, welches mit dem Stirnrad der Eingangswelle in Eingriff steht, und dass die jeweilige Kupplungsnabe drehfest mit dem jeweiligen Stirnrad der Rückführwellen verbunden ist, welche mit dem jeweiligen Ausgangsstirnrad des Differentials kämmt.

Als besonders bauraumsparend und zuverlässig erweist sich eine Ausführungsform des erfindungsgemäßen Achsgetriebes, die ein Differential vorsieht, das als Planetengetriebe ausgestaltet ist. Bei einer Ausführungsform des Differentials mit zwei Ausgangsstirnrädern ist beispielsweise eines der Ausgangsstirnräder mit einem Sonnenrad des Planentengetriebes drehfest verbunden, während das andere Ausgangsstirnrad drehfest mit einem Planetenträger des Planentengetriebes verbunden ist.

In einer bevorzugten Ausführungsform der Erfindung ist ein Zwischengetriebe, insbesondere ein Kegelradgetriebe an einem Abtriebsende der jeweiligen Rückführwellen vorgesehen. Da das Kegelradgetriebe nicht alle vom Schaltgetriebe ausgegebenen Drehmomente übertragen muss, können die Komponenten des Kegelradgetriebes viel kleiner als ein herkömmliches Kegelradgetriebe ausgelegt werden, welches mit einem herkömmlichen Differential verwendet wird. Zudem können die Komponenten des Differentials viel kleiner ausgelegt werden, da das Differential direkt nach dem Schaltgetriebe angeordnet ist.

In einer anderen bevorzugten Ausführungsform der Erfindung ist das Achsgetriebe zur Längsachse im Wesentlichen symmetrisch aufgebaut. Somit können sich die auftretenden Reaktionskräfte und -momente gegenseitig kompensieren. Dadurch erfolgt keine negative Beeinflussung des Schaltgetriebes.

In einer anderen bevorzugten Ausführungsform der Erfindung sind Komponenten, mit denen die Achswellen an die Rückführwellen gekoppelt sind, asymmetrisch bezüglich der Längsachse angeordnet. Diese leichte Asymmetrie entspricht einer geringfügigen Asymmetrie des im Übrigen gewöhnlich konischen Aufbaus eines Gehäuses des Schaltgetriebes.

In einer anderen bevorzugten Ausführungsform der Erfindung ist ein Gelenkaußengehäuse von Gleichlaufgelenken im Zwischengetriebe am Abtriebsende der jeweiligen Rückführwellen in das Achsgetriebe integriert. Da die Gelenkaußengehäuse weit nach innen versetzt werden, werden die bei Stößen auftretenden Auslenkwinkel der Achswellen minimiert.

Die Erfindung wird im Folgenden lediglich beispielhaft anhand der Zeichnungen beschrieben; in diesen zeigt:
- Fig. 1: eine schematische Darstellung eines Kraftfahrzeugantriebsstrangs, der mit einem Achsgetriebe ausgerüstet ist;
- Fig. 2: eine schematische Schnittdarstellung einer Ausführungsform des Achsgetriebes;
- Fig. 3: eine schematische Schnittdarstellung einer anderen Ausführungsform des Achsgetriebes;
- Fig. 4: eine schematische Schnittdarstellung einer ersten Ausführungsform eines Differentials des Achsgetriebes;
- Fig. 5: eine schematische Schnittdarstellung einer zweiten Ausführungsform eines Differentials des Achsgetriebes;
- Fig. 6: eine schematische Schnittdarstellung einer dritten Ausführungsform eines Differentials des Achsgetriebes;
- Fig. 7: eine Schnittdarstellung des Achsgetriebes;
- Fig. 8: eine Draufsicht des Achsgetriebes, das mit einem Schaltgetriebe fest verbunden ist;
- Fig. 9: eine schematische Schnittdarstellung eines Achsgetriebes, das mit Kupplungen zur Drehmomentverteilung ausgerüstet ist; und
- Fig. 10: eine vergrößerte Schnittdarstellung eines Abschnitts des Achsgetriebes, das mit Kupplungen zur Drehmomentverteilung ausgerüstet ist.

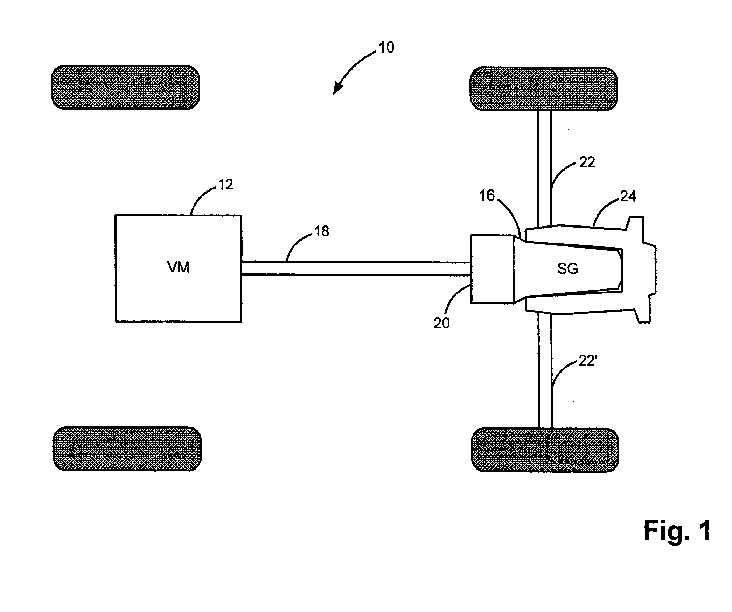

Fig. 1 stellt eine schematische Darstellung eines Fahrzeugantriebstrangs 10 dar, der einen Antrieb 12, beispielsweise einen Verbrennungsmotor, und ein Schaltgetriebe 16 umfasst. Das Schaltgetriebe 16 ist durch eine Kardanwelle 18 und eine Verbindungsanordnung 20 mit dem Antrieb 12 drehwirksam verbunden. Die Verbindungsanordnung 20 kann beispielsweise einen Drehmomentwandler oder eine Schaltkupplung umfassen. Zur Übertragung des Drehmoments an die Achswellen 22, 22' der Hinterachse ist ein erfindungsgemäßes Achsgetriebe 24 vorgesehen. Insbesondere ist jede der Achswellen 22, 22' der Hinterachse durch das Achsgetriebe 24 drehwirksam mit einer Abtriebswelle des Schaltgetriebes 16 verbunden.

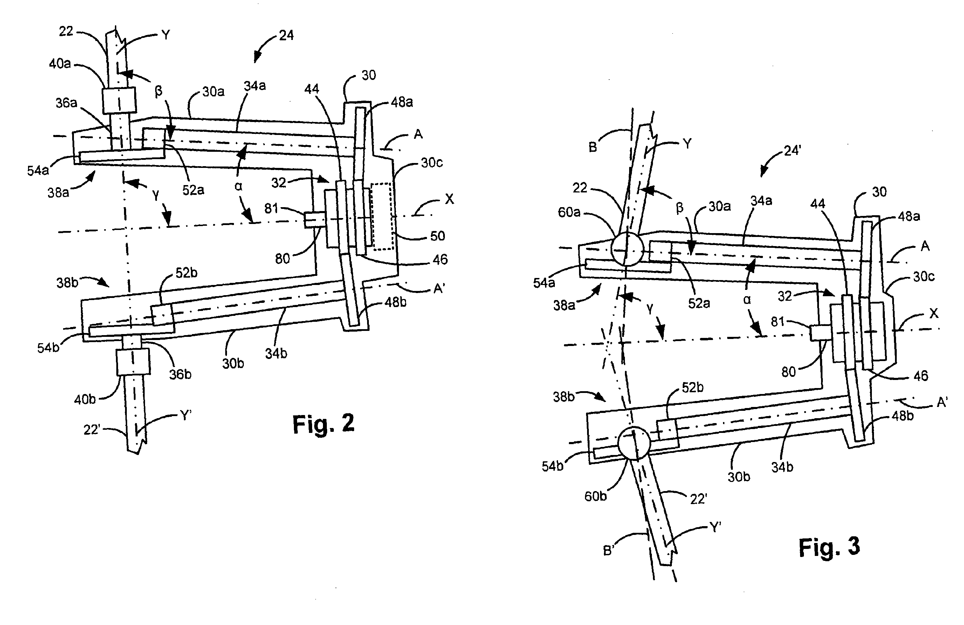

In Fig. 2 ist eine Ausführungsform des Achsgetriebes 24 schematisch dargestellt. Das Achsgetriebe 24 umfasst ein Gehäuse 30, ein Differential 32, zwei Rückführwellen 34a, 34b, zwei Ausgangswellen 36a, 36b sowie zwei Zwischengetriebe 38a, 38b, die jeweils die Rückführwellen 34a, 34b mit den Ausgangswellen 36a, 36b drehwirksam verbinden. Insbesondere ist das Gehäuse 30 im Wesentlichen U-förmig und weist zwei Schenkel 30a, 30b auf, innerhalb welcher sich jeweils die Rückführwellen 34a, 34b erstrecken, wobei die Schenkel 30a, 30b über eine Basis 30c verbunden sind. Jede der Drehachsen A, A' der Rückführwellen schließt mit der Längsachse X des Antriebsstranges einen Winkel α ein. Zudem schließt jede der Drehachsen Y, Y' der Achswellen 22, 22' einen Winkel β mit den Drehachsen A, A' der Rückführwellen 34a, 34b ein.

In der Ausführungsform der Fig. 2 ist der Winkel β größer als 90°, wobei die Drehachsen Y, Y' der Achswellen 22, 22' in einem Winkel γ von 90° zur Längsachse X des Antriebsstrangs stehen. Da die Drehachsen Y, Y' der Achswellen 22, 22' in einem Winkel γ von 90° zur Längsachse X stehen, können Kreuzgelenke 40a, 40b verwendet werden, um das Abtriebsende des Achsgetriebes 24 mit den Achswellen 22, 22' drehwirksam zu verbinden.

Das Differential 32 umfasst Stirnräder 44, 46, die in Stirnräder 48b, 48a der jeweiligen Rückführwellen 34b, 34a eingreifen, um die Rückführwellen 34b, 34a anzutreiben. Das Achsgetriebe 24 kann ferner eine Kupplungsanordnung 50 zum Sperren des Differentials 32 umfassen, wobei beide Stirnräder 44, 46 drehfest mit der Abtriebswelle des Schaltgetriebes 16 verbunden werden können. Das Differential 32 ist durch eine Eingangswelle 80 angetrieben, die ein antriebsseitiges Ende 81 umfasst, das drehfest mit einer Ausgangswelle des Schaltgetriebes 16 verbunden ist. Das Differential 32 kann viel kleiner sein als ein herkömmliches Differential, da dieses direkt nach dem Schaltgetriebe 16 angeordnet ist.

Am Abtriebsende der Rückführwellen 34a, 34b sind die Zwischengetriebe 38a, 38b angeordnet. Die Zwischengetriebe 38a, 38b umfassen Zahnräder 52a, 52b, die drehfest mit der jeweiligen Rückführwellen 34a, 34b verbunden sind, und Tellerräder 54a, 54b, die drehfest mit der jeweiligen Ausgangswellen 36a, 36b verbunden sind. Die Anordnung von Komponente innerhalb des Achsgetriebe 24 besitzt eine leichte Asymmetrie zur Längsachse X, wobei bei der einen Rückführwelle 34a das Tellerrad 54a zwischen der Längsachse X und der Drehachse A vorgesehen ist, und wobei bei der anderen Rückführwelle 34b das Tellerrad 54b zwischen der Drehachse A' und der zugehörigen Achswelle 22' vorgesehen ist. Dies entspricht einer geringfügigen Asymmetrie des im Übrigen gewöhnlich konischen Aufbaus eines Gehäuses des Schaltgetriebes 16. Da jedes der Tellerräder 54a, 54b nicht alle vom Schaltgetriebe 16 abgegebenen Drehmomente übertragen muss, ist jedes der Tellerräder 54a, 54b viel kleiner als eines, das mit einem herkömmlichen Differential verwendet wird.

In Fig. 3 ist eine weitere Ausführungsform des Achsgetriebes schematisch dargestellt, das mit dem Bezugszeichen 24' angezeigt ist. Das Achsgetriebe der Fig. 3 unterscheidet sich derart von dem Achsgetriebe 24 der Fig. 2, dass die Ebene, innerhalb welcher sich die Tellerräder 52a, 52b drehen, parallel zu der jeweiligen Drehachse A, A' der Rückführwellen 34a, 34b liegt. Somit ist der Winkel β ungleich 90° und es ist vorzugsweise eine gepfeilte Anordnung der Achswellen 22, 22' vorgesehen. Die Tellerräder 54a, 54b drehen sich um die Drehachsen B, B'. Um einen Gleichlauf der Achswellen 22, 22' unter dem Winkel β zu gewährleisten, werden vorzugsweise Gleichlaufgelenke 60a, 60b statt Kreuzgelenke verwendet, wobei die Drehachsen Y, Y' der Achswellen 22, 22' unter einem Winkel γ zur Längsachse X verlaufen, der kleiner als 90° ist.

Die Rückführwellen 34a, 34b sind bezüglich der Längsachse X an zwei gegenüberliegenden Seiten des Achsgetriebes 24, 24' angeordnet und über ein Zwischengetriebe 38a, 38b mit einer zugeordneten Achswelle 22, 22' gekoppelt. Die Rückführwellen 34a, 34b verlaufen annähernd parallel zur Eingangswelle 80 und erstrecken sich vom antriebsseitigen Ende 81 in Richtung des abtriebsseitig angeordneten Zwischengetriebes 38a, 38b, somit in Richtung des Antriebs 12 in Fig. 1.

Ein Antriebsmoment, das dem Abtriebsmoment des Schaltgetriebes entspricht, wird vom antriebsseitigen Ende 81 über eine Eingangswelle 80 von dem Differential 32 auf die Rückführwellen 34a, 34b verteilt, und von diesen über je das Zwischengetriebe 38a, 38b auf die zugeordnete Achswelle 22, 22' übertragen.

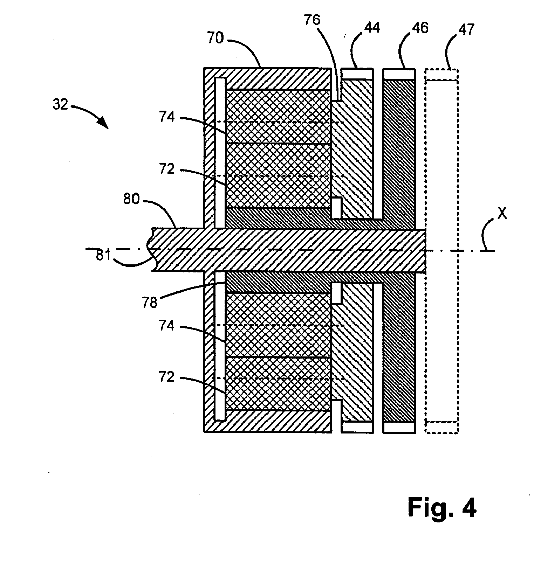

Fig. 4 zeigt eine erste Ausführungsform des Differentials 32. Das Differential 32 ist als ein Planetendifferential vorgesehen, das ein Hohlrad 70, zwei Planetenradsätze 72, 74, einen Planetenträger 76 und ein Sonnenrad 78 umfasst. Das Hohlrad 70 ist drehfest mit der Eingangswelle 80 des Achsgetriebes 24, 24' verbunden. Die Eingangswelle 80 läuft um die Längsachse X um und umfasst das antriebsseitige Ende 81, das drehfest mit einer Ausgangswelle des Schaltgetriebes 16 verbunden ist. Die Planetenradsätze 72, 74 sind mittels des Planetenträgers 76 drehbar unterstützt, wobei die Planetenräder des ersten Planetenradsatzes 72 in das Hohlrad 70 sowie in die Planetenräder des zweiten Planetenradsatzes 74 eingreifen, und die Planetenräder des zweiten Planetenradsatzes 74 greifen in das Sonnenrad 78 ein. Der Planetenträger 76 ist drehfest mit dem Stirnrad 44 verbunden. Das Sonnenrad 78 ist durch eine Zwischenhohlwelle drehfest mit dem Stirnrad 46 verbunden. Ein zusätzliches Stirnrad 47 kann vorgesehen werden, um einen TV-Betrieb, wie unten näher erläutert, zu ermöglichen.

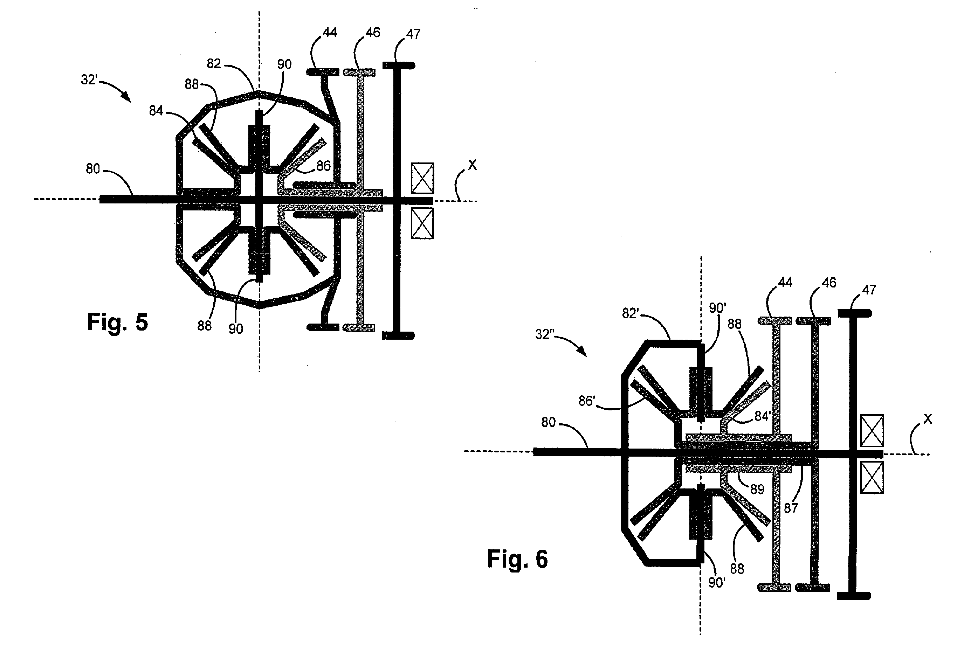

In Fig. 5 ist eine zweite Ausführungsform des Differentials 32 dargestellt. Das Differential ist hier als ein Kegelraddifferential 32' ausgebildet. Das Kegelraddifferential 32' umfasst ein Ausgleichsgehäuse 82, das drehbar um die Eingangswelle 80 und drehfest mit dem Stirnrad 44 und einem Kegelrad 84 verbunden ist. Ein Kegelrad 86 ist mittels einer Zwischenhohlwelle drehfest mit dem Stirnrad 46 verbunden, wobei die Zwischenhohlwelle drehbar um die Antriebswelle 80 gelagert ist. Kegelräder 88 sind drehbar um jeweilige Zapfen 90 gelagert und greifen in die Kegelräder 84, 86 ein. Die Zapfen 90 sind quer zur Längsachse X der Eingangswelle 80 angeordnet. Ferner kann ein zusätzliches Stirnrad 47 vorgesehen werden, das drehfest mit der Eingangswelle 80 verbunden ist, um den TV-Betrieb, wie unten näher erläutert, zu ermöglichen.

In Fig. 6 ist eine dritte Ausführungsform des Differentials dargestellt. Das Differential ist hier als ein Kegelraddifferential 32" vorgesehen und umfasst ein Ausgleichsgehäuse 82', das drehfest mit der Antriebswelle 80 verbunden ist. Ein Kegelrad 86' ist mittels einer ersten Zwischenhohlwelle 87 drehfest mit dem Stirnrad 46 verbunden, wobei die erste Zwischenhohlwelle 87 um die Eingangswelle 80 drehbar gelagert ist. Ein Kegelrad 84' ist mittels einer zweiten Zwischenhohlwelle 89 drehfest mit dem Stirnrad 44 verbunden, wobei die zweite Zwischenhohlwelle 89 um die erste Zwischenhohlwelle 87 drehbar gelagert ist. Kegelräder 88 sind drehbar um jeweilige Zapfen 90' gelagert und greifen in die Kegelräder 84', 86' ein. Die Zapfen 90' sind drehfest mit dem Ausgleichsgehäuse 82' verbunden und quer zur Drehachse X der Eingangswelle 80 angeordnet. Ferner ist das Stirnrad 47 vorgesehen, das drehfest mit der Eingangswelle 80 verbunden ist, um den TV-Betrieb, wie unten näher erläutert, zu ermöglichen.

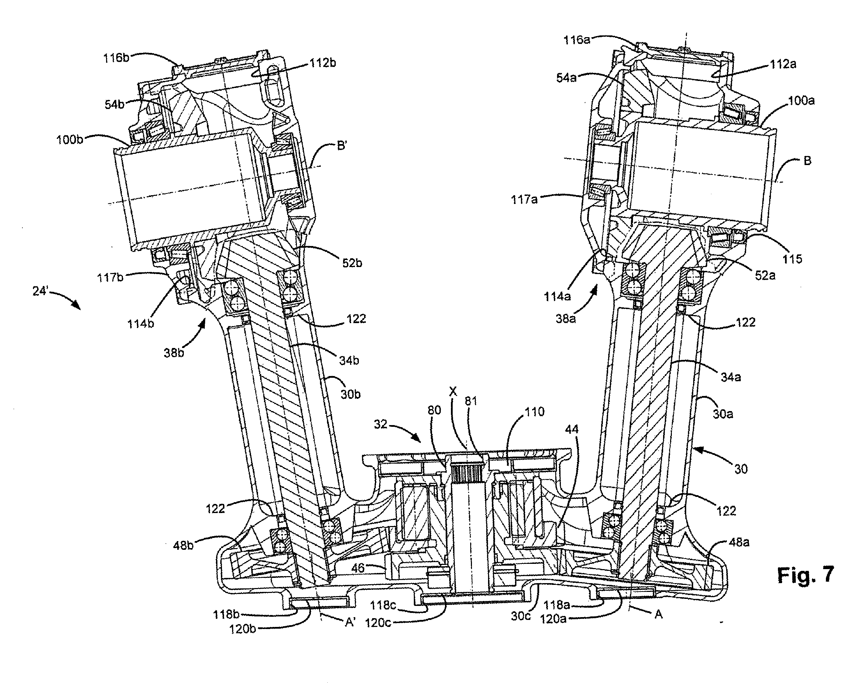

In Fig. 7 ist eine Schnittdarstellung des Achsgetriebes 24' der Fig. 3 gezeigt. Das Achsgetriebe 24' umfasst das Gehäuse 30, das Differential 32, die Rückführwellen 34a, 34b und die Zwischengetriebe 38a, 38b. Jedes der Zwischengetriebe 38a, 38b ist jeweils mit einem Gelenkaußengehäuse 100a, 100b, beispielsweise ein Gleichlauf-Verschiebegelenk, drehwirksam verbunden. Insbesondere können die Gelenkaußengehäuse 100a, 100b weit nach innen versetzt werden, um die bei Stößen auftretenden Auslenkwinkel der Achswellen 22, 22' (in Fig. 3) zu minimieren. Die Zwischengetriebe 38a, 38b sind als Kegelradgetriebe ausgebildet, wobei die Zahnräder 52a, 52b als Kegelräder vorgesehen sind. Vorzugsweise umfasst das Tellerrad 54a, 54b und das Kegelrad 52a, 52b jedes Zwischengetriebes 38a, 38b Hypoid- oder Spiralverzahnungen, um eine geringe Geräuschbildung zu ermöglichen. Die Tellerräder 54a, 54b sind jeweils um eine Umfangsfläche der Gelenkaußengehäuse 100a, 100b angeordnet und mit diesem drehfest verbunden.

Wie oben erwähnt, ist das Gehäuse 30 im Wesentlichen U-förmig und weist zwei Schenkel 30a, 30b auf. Zudem umfasst das Gehäuse 30 wenige Öffnungen zur Montage und Verbindung des Achsgetriebes 24, 24'. Das Gehäuse 30 umfasst eine Öffnung 110 der Basis 30c für die Verbindung zum Ausgang des Schaltgetriebes 16, Öffnungen 112a, 112b an den Längsenden der Schenkel 30a, 30b zum axialen Einführen der jeweiligen Rückführwelle 34a, 34b und jeweilige innenseitige bzw. außenseitige Öffnungen 114a, 114b an den Schenkeln 30a, 30b zum Einsetzen des jeweiligen Gelenkaußengehäuses 100a, 100b mit den Tellerrädern 54a, 54b nach dem Einführen der Rückführwellen 34a, 34b. Die Öffnungen 112a, 112b an den Längsenden der Schenkel 30a, 30b sind jeweils mit Deckeln 116a, 116b verschlossen.

Die Öffnungen 114a, 114b sind jeweils mittels Gehäusedeckeln 117a, 117b verschlossen. Ein Ende des Gelenkaußengehäuses 100a ist drehbar in der Abdeckung 117a gelagert. Das Gelenkaußengehäuse 100a erstreckt sich außerhalb des Gehäuses 30 durch eine Öffnung 115 und ist darin drehbar gelagert. Das Gelenkaußengehäuse 100b erstreckt sich durch die Abdeckung 117b und ist in dieser drehbar gelagert. Ein Ende des Gelenkaußengehäuses 100b ist drehbar im Gehäuse 30 bzw. im Gehäuse des Schenkels 30b gelagert.

Das Gehäuse 30 umfasst ferner Öffnungen 118a, 118b, 118c der Basis 30c zur Montage der Komponenten des Achsgetriebes 24, 24', die mit jeweiligen Deckeln 120a, 120b, 120c verschlossen sind. Da die Gehäuse 30 mit wenigen Öffnungen versehen sind, wird die Steifigkeit des Achsgetriebes 24, 24' erhöht. Die Schenkel 30a, 30b umfassen Trennwände 122, in welchen die jeweiligen Rückführwellen 34a, 34b drehbar gelagert sind.

Wie aus Fig. 7 erkennbar ist, sind die Rückführwellen 34a und 34b, die Kegelräder 52a und 52b und die Tellerräder 54a und 54b gleich konstruiert. Zudem sind die Stirnräder 48a und 48b gleich konstruiert, obwohl, wie aus Fig. 7 ersichtlich, die Montage der jeweiligen Stirnräder 48a, 48b in entgegengesetzte Richtungen durchgeführt wird. Da einzelne Komponenten des Achsgetriebes 24, 24' gleich konstruiert sind, wird die Herstellung des Achsgetriebes 24, 24' billiger und einfacher.

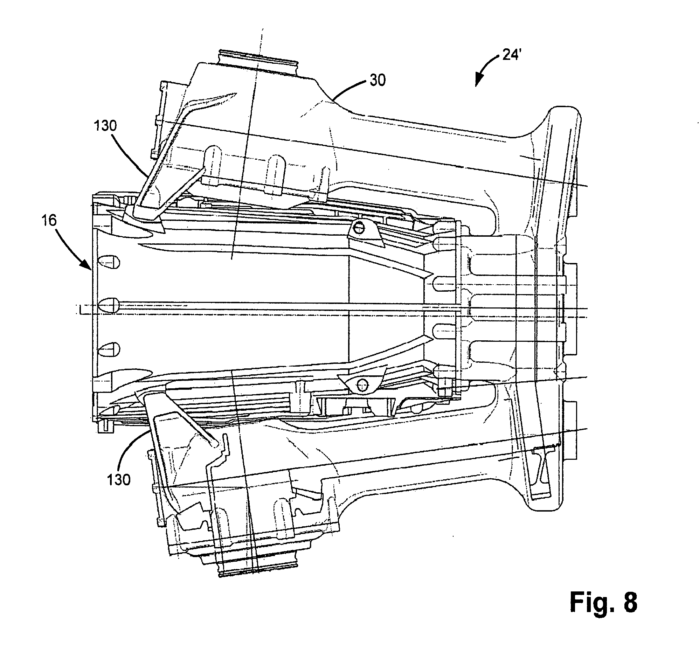

Fig. 8 stellt das Schaltgetriebe 16 und das Achsgetriebe 24' im montierten Zustand dar. Das Gehäuse 30 weist integrierte geformte Stützen 130 auf, die fest mit einem Gehäuse des Schaltgetriebes 16 verbunden sind. Zudem ist das Achsgetriebe 24' am Ausgangsende des Schaltgetriebes 16 fest mit dem Schaltgetriebe 16 verbunden. Durch den im Wesentlichen symmetrischen Aufbau und die Verbindung des Achsgetriebes 24, 24' können sich die auftretenden Reaktionskräfte und -momente gegenseitig kompensieren. Dadurch erfolgt keine negative Beeinflussung des Schaltgetriebes 16.

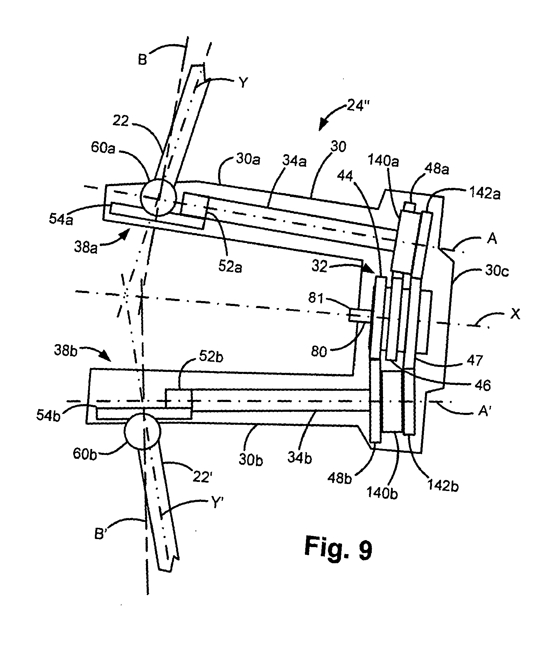

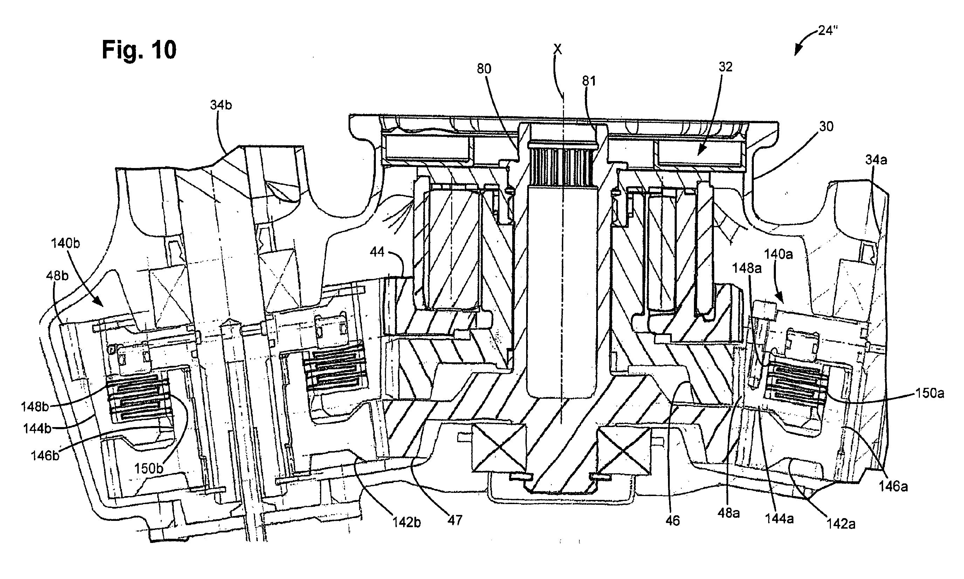

Unter Bezugnahme auf die Fig. 9 und Fig. 10 wird ein erfindungsgemäßes Achsgetriebe 24" mit einem integrierten TV-System näher erläutert. Das Achsgetriebe 24" umfasst die gleichen Bauteile wie das Achsgetriebe 24'. Zudem umfasst das Achsgetriebe 24" zwei Lamellenkupplungen 140a, 140b, die mit den jeweiligen Rückführwellen 34a, 34b und dem Differential 32 drehwirksam verbunden sind. Das Differential 32 weist das Stirnrad 47 auf, das in jeweilige Stirnräder 142a, 142b der Rückführwellen 34a, 34b eingreift. Insbesondere sind die Stirnräder 142a, 142b drehbar um die jeweiligen Rückführwellen 34a, 34b gelagert. Wahlweise kann das Achsgetriebe 24" zum Sperren des Differentials 32, 32', 32" eine nicht dargestellte Kupplungsanordnung 50 wie in Fig. 2 umfassen. Vorzugsweise ist die Übersetzung der Stirnradstufe 46, 48a; 44, 48b anders gewählt als die Übersetzung der Stirnradstufe 47, 142a; 47, 142b.

Jede der Lamellenkupplungen 140a, 140b umfasst einen Kupplungskorb 144a, 144b (Fig. 10), eine Kupplungsnabe 146a, 146b, einen ersten Lamellensatz 148a, 148b und einen zweiten Lamellensatz 150a, 150b. Der Kupplungskorb 144a, 144b ist drehfest mit dem Stirnrad 48a, 48b und der Rückführwelle 34a, 34b verbunden. Zudem sind die Lamellen des ersten Lamellensatzes 148a, 148b drehfest mit dem Kupplungskorb 144a, 144b verbunden. Die Kupplungsnabe 146a, 146b ist drehbar um die Rückführwelle 34a, 34b gelagert und ist drehfest mit dem Stirnrad 142a, 142b verbunden. Gemäß der in Fig. 10 dargestellten Ausführungsform ist die Kupplungsnabe 146a, 146b integriert mit dem Stirnrad 142a, 142b ausgebildet. Die Lamellen des zweiten Lamellensatzes 150a, 150b sind drehfest mit der Kupplungsnabe 146a, 146b verbunden. Zur Übertragung eines Drehmoments sind die Lamellen der Lamellensätze 148a, 148b; 150a, 150b so aneinander anpressbar, dass zwischen den Lamellen der Lamellensätze 148a, 148b; 150a, 150b ein Drehmoment übertragen wird.

Während eines TV-Betriebs wird zumindest eine der Lamellenkupplungen 140a, 140b betätigt, wobei die Lamellen der Lamellensätze 148a, 148b; 150a, 150b aneinander angepresst werden. Somit wird die jeweilige Rückführwelle 34a, 34b direkt mit der Antriebswelle 80 angetrieben, wobei der Kraftfluss durch die Antriebswelle 80, das Stirnrad 47, das Stirnrad 142a, 142b, die Kupplungsnabe 146a, 146b, die Lamellen der Lamellensätze 148a, 148b; 150a, 150b, den Kupplungskorb 144a, 144b und schließlich die Rückführwelle 34a, 34b erfolgt. Die Anpresskraft der Lamellensätze 148a, 148b; 150a, 150b kann derart geregelt werden, dass das übertragene Drehmoment gesteuert werden kann.

### Bezugszeichenliste

- 10: Antriebsstrang
- 12: Antrieb
- 16: Schaltgetriebe
- 18: Kardanwelle
- 20: Verbindungsanordnung
- 22, 22': Achswellen
- 24, 24', 24": Achsgetriebe
- 30: Gehäuse
- 30a, 30b: Schenkel
- 30c: Basis
- 32, 32', 32": Differential
- 34a, 34b: Rückführwellen
- 36a, 36b: Ausgangswellen
- 38a, 38b: Zwischengetriebe
- 40a, 40b: Kreuzgelenk
- 44, 46, 47: Stirnrad
- 48a, 48b: Stirnrad
- 50: Kupplungsanordnung
- 52a, 52b: Zahnrad
- 54a, 54b: Tellerrad
- 60a, 60b: Gleichlaufgelenk
- 70: Hohlrad
- 72, 74: Planetenradsatz
- 76: Planetenträger
- 78: Sonnenrad
- 80: Eingangswelle
- 81: antriebsseitiges Ende
- 82, 82': Ausgleichsgehäuse
- 84, 84': Kegelrad
- 86, 86': Kegelrad
- 87: Zwischenhohlwelle
- 89: Zwischenhohlwelle
- 88: Kegelrad
- 90, 90': Zapfen
- 100a, 100b: Gelenkaußengehäuse
- 110: Öffnung
- 112a, 112b: Öffnung
- 114a, 114b: Öffnung
- 115: Öffnung
- 116a, 116b: Deckel
- 117a, 117b: Gehäusedeckel
- 118a - c: Öffnung
- 120a - c: Deckel
- 130: Stütze
- 140a, 140b: Lamellenkupplung
- 142a, 142b: Stirnrad
- 144a, 144b: Kupplungskorb
- 146a, 146b: Kupplungsnabe
- 148a, 148b: Lamellensatz
- 150a, 150b: Lamellensatz

## Patentansprüche

1. Achsgetriebe (24, 24', 24") eines Kraftfahrzeugs, mit einer Eingangswelle (80), die um eine Längsachse (X) umläuft und ein antriebsseitiges Ende (81) aufweist, über die ein Antriebsmoment einleitbar ist, und mit einem Differential (32, 32', 32"), das eingangsseitig mit der Eingangswelle (80) und ausgangsseitig mit zwei Rückführwellen (34a, 34b) antriebsverbunden ist, wobei die Rückführwellen (34a, 34b) bezüglich der Längsachse (X) an zwei einander gegenüber liegenden Seiten des Achsgetriebes (24, 24', 24") angeordnet und mit einer jeweiligen Achswelle (22, 22') gekoppelt sind, und wobei die Rückführwellen (34a, 34b) zumindest annähend parallel zur Eingangswelle (80) verlaufen und sich vom antriebsseitiges Ende (81) der Eingangwelle (80) in Richtung der Achswellen (22, 22') erstrecken.

2. Achsgetriebe (24, 24', 24") nach Anspruch 1,
**dadurch gekennzeichnet,**
**dass** das Differential (32, 32', 32") zumindest zwei Ausgangsstirnräder (44, 46) aufweist, die in Stirnräder (48a, 48b) der jeweiligen Rückführwellen (34a, 34b) eingreifen.

3. Achsgetriebe (24, 24', 24") nach Anspruch 1 oder 2,
**dadurch gekennzeichnet,**
**dass** das Achsgetriebe (24, 24', 24") ferner ein Mittel (140a, 140b) umfasst, das einen Direktantrieb zumindest einer der Rückführwellen (34a, 34b) durch die Eingangswelle (80) ermöglicht.

4. Achsgetriebe (24, 24', 24") nach Anspruch 3,
**dadurch gekennzeichnet,**
**dass** ein Stirnrad (47) drehfest mit der Eingangswelle (80) verbunden ist, wobei das Stirnrad (47) in jeweilige Stirnräder (142a, 142b) eingreift, die drehfest mit der jeweiligen Rückführwelle (34a, 34b) verbindbar sind.

5. Achsgetriebe (24, 24', 24") nach Anspruch 4,
**dadurch gekennzeichnet,**
**dass** das Mittel Lamellenkupplungen (140a, 140b) umfasst, wobei die mit dem Stirnrad (47) der Eingangswelle (80) in Eingriff stehenden Stirnräder (142a, 142b) drehfest mit jeweiligen Kupplungsnaben (146a, 146b) der Lamellenkupplungen (140a, 140b) verbunden sind.

6. Achsgetriebe (24, 24', 24") nach Anspruch 2 und zumindest einem der Ansprüche 3 bis 5,
**dadurch gekennzeichnet,**
**dass** das Mittel Lamellenkupplungen (140a, 140b) umfasst, wobei die mit den Ausgangsstirnrädern (44, 46) des Differentials kämmenden Stirnräder (48a, 48b) der Rückführwellen drehfest mit einem Kupplungskorb (144a, 144b) der jeweiligen Lamellenkupplung (140a, 140b) verbunden sind.

7. Achsgetriebe (24, 24', 24") nach zumindest einem der vorhergehenden Ansprüche,
**dadurch gekennzeichnet,**
**dass** das Differential (32, 32', 32") ein Planetendifferentialgetriebe ist.

8. Achsgetriebe (24, 24', 24") nach zumindest einem der vorhergehenden Ansprüche,
**dadurch gekennzeichnet,**
**dass** an einem Abtriebsende der jeweiligen Rückführwellen (34a, 34b) ein Zwischengetriebe (38a, 38b), insbesondere ein Kegelradgetriebe vorgesehen ist.

9. Achsgetriebe (24, 24', 24") nach Anspruch 8,
**dadurch gekennzeichnet,**
**dass** das Zwischengetriebe (38a, 38b) ein Hypoid- oder Spiralkegelradgetriebe ist.

10. Achsgetriebe (24, 24', 24") nach zumindest einem der vorhergehenden Ansprüche,
**dadurch gekennzeichnet,**
**dass** das Achsgetriebe (24, 24', 24") zur Längsachse (X) im Wesentlichen symmetrisch aufgebaut ist.

11. Achsgetriebe (24, 24', 24") nach zumindest einem der vorhergehenden Ansprüche,
**dadurch gekennzeichnet,**
**dass** Komponenten, mit denen die Achswellen (22) an die Rückführwellen (34a, 34b) gekoppelt sind, bezüglich der Längsachse (X) asymmetrisch angeordnet sind.

12. Achsgetriebe (24, 24', 24") nach Anspruch 11,
**dadurch gekennzeichnet,**
**dass** bei der einen Rückführwelle (34a) ein Tellerrad (54a) zwischen der Längsachse (X) und einer Drehachse (A) der einen Rückführwelle (34a) vorgesehen ist, und dass bei der anderen Rückführwelle (34b) ein Tellerrad (54b) zwischen der Drehachse (A') der anderen Rückführwelle (34b) und der zugehörigen Achswelle (22') vorgesehen ist.

13. Achsgetriebe (24, 24', 24") nach zumindest einem der vorhergehende Ansprüche,
**dadurch gekennzeichnet,**
**dass** die Drehachsen (A, A') der jeweiligen Rückführwellen (34a, 34b) und die Drehachsen (Y, Y') der Achswellen (22, 22') der Hinterachse einen Winkel von ungleich 90° einschließen.

14. Achsgetriebe (24, 24', 24") nach Anspruch 13,
**dadurch gekennzeichnet,**
**dass** ein Gelenkaußengehäuse (100a, 100b) von Gleichlaufgelenken (60a, 60b) im Zwischengetriebe (38a, 38b) am Antriebsende der jeweiligen Rückführwellen (34a, 34b) in das Achsgetriebe (24, 24', 24") integriert ist.

15. Achsgetriebe (24, 24', 24") nach zumindest einem der vorhergehenden Ansprüche 1 - 8,
**dadurch gekennzeichnet,**
**dass** die Drehachsen (A, A') der jeweiligen Rückführwellen (34a, 34b) und die Drehachsen (Y, Y') der Achswellen (22, 22') der Hinterachse einen Winkel von größer als 90° einschließen.

16. Achsgetriebe (24, 24', 24") nach Anspruch 15,
**dadurch gekennzeichnet,**
**dass** Kreuzgelenke (40a, 40b) am Abtriebsende der jeweiligen Rückführwellen (34a, 34b) außerhalb eines Gehäuses (30) des Achsgetriebes (24, 24', 24") angeordnet sind.

17. Achsgetriebe (24, 24', 24") nach zumindest einem der vorhergehenden Ansprüche,
**dadurch gekennzeichnet,**
**dass** das Achsgetriebe (24, 24', 24") ein Gehäuse (30) mit zwei seitlichen Schenkeln (30a, 30b) umfasst, innerhalb welcher sich die jeweiligen Rückführwellen (34a, 34b) erstrecken.

18. Antriebsstrang eines Kraftfahrzeuges (10) mit einem Achsgetriebe (24, 24', 24") nach einem der vorhergehenden Ansprüche.
